# EUROPÄISCHE PATENTSCHRIFT

(11) **EP 3 684 985 B1**
(45) Veröffentlichungstag und Bekanntmachung des Hinweises auf die Patenterteilung: **12.06.2024**
(21) Anmeldenummer: 18781953.7
(22) Anmeldetag: 20.09.2018
(51) Int. Cl.: E04C 5/07

(54) **BEWEHRUNGSMATERIAL**
REINFORCEMENT MATERIAL
MATÉRIAU D'ARMATURE

(30) Priorität: 20.09.2017 AT 507992017
(43) Veröffentlichungstag der Anmeldung: 29.07.2020
(73) Patentinhaber: Lohnveredelung Fussenegger & Grabher GmbH, 6850 Dornbirn (AT)
(72) Erfinder: FRÖIS, Thomas, 6832 Sulz (AT); BECHTOLD, Thomas, 6850 Dornbirn (AT); EGGER, Matthias, 6421 Rietz (AT); FEIX, Jürgen, 6094 Axams (AT); HÄMMERLE, Harald, 6890 Lustenau (AT); GRABHER, Günter, 6911 Eichenberg (AT); HOFER, Mathias, 6890 Lustenau (AT); HOFER, Stefan, 6890 Lustenau (AT); MEIXNER, Gerhard, 6135 Stans (AT)
(74) Vertreter: Schwarz & Partner Patentanwälte GmbH
(86) Internationale Anmeldenummer: PCT/AT2018/060221
(87) Internationale Veröffentlichungsnummer: WO 2019/056038

(56) Entgegenhaltungen:
- DE-A1-102014 102 861
- T. Gries ET AL: "Manufacturing of textiles for civil engineering applications" In: "Textile Fibre Composites in Civil Engineering", 1. Januar 2016 (2016-01-01), Elsevier, XP055536749, ISBN: 978-1-78242-446-8 Seiten 3-24, DOI: 10.1016/B978-1-78242-446-8.00002-1, Seite 13, Absatz 1.4 - Seite 18 Fig. 1.13 - 1.15

## Beschreibung

Die vorliegende Erfindung betrifft eine Bewehrung für eine aushärtende Matrix, insbesondere Beton, umfassend eine Gitterstruktur aus Rovings, wobei die Rovings in mehreren Bahnen angeordnet sind und Kreuzungspunkte bilden. Weiters betrifft die Erfindung ein Verfahren zur Herstellung einer Bewehrung, insbesondere für eine aushärtende Matrix wie Beton, umfassend eine Gitterstruktur aus Rovings. Darüber hinaus betrifft die Erfindung Textilbeton, umfassend eine solche Bewehrung, die Herstellung von Textilbeton sowie Verwendungsmöglichkeiten der Bewehrung.

### HINTERGRUND DER ERFINDUNG

Beton ist der im Bauwesen am meisten verwendete Baustoff und er zeichnet sich durch eine hohe Druckfestigkeit aus. Da seine Zugfestigkeit nur ca. 10% der Druckfestigkeit beträgt, muss der Großteil der Betonbauteile mit einer Bewehrung ergänzt werden, welche zur Aufnahme von Zugkräften geeignet ist und im Betonverbund funktioniert. Als Bewehrung wird hauptsächlich Stahl verwendet, der jedoch nachteilig ist. Stahlkorrosion, welches die häufigste Schadensursache bei Stahlbetonbauteilen ist, führt zu einer begrenzten Lebensdauer. Um Stahlkorrosion zu verhindern, ist eine ausreichende Betonüberdeckung erforderlich, welche zu größeren Bauteilstärken und zu zusätzlichem Konstruktionseigengewicht führt.

Als alternatives Bewehrungsmaterial werden seit einiger Zeit auch Textilien unter Bildung von Textilbeton (Textile Reinforced Concrete - TRC) eingesetzt. Dabei werden dem Beton textile Fasern zur Aufnahme der Zugkräfte zugesetzt. Bei den Fasern handelt es sich um alkali- und korrosionsresistente Fasern wie beispielsweise Carbon oder AR Glas, welche in den Beton so eingearbeitet werden müssen, dass dieser die Fasern gleichmäßig umhüllt. Aus diesem Grund haben sich gitterförmige Verstärkungsstrukturen durchgesetzt, wobei es je nach Einsatzgebiet unterschiedlicher Verschiebe- und Drapierfähigkeiten bedarf.

Der Verbund wird bei den verwendeten Textilen hauptsächlich durch Reibschluss bestimmt, welcher durch die Textiloberfläche maßgeblich beeinflusst werden kann. Die fertigen textilen Verstärkungsstrukturen werden im Guss, Laminier- oder Spritzverfahren in die Betonstruktur eingebracht. Eigenschaften wie hohe Zugfestigkeiten, Abmessungen im Millimeterbereich sowie die Tatsache, dass die verwendeten Fasern nicht vor Korrosion geschützt werden müssen, sprechen für den Textilbeton.

Aus technischen und finanziellen Gründen besitzen textile Bewehrungen für eine alkalisch aushärtende Matrixebene ein- und zweidimensionale Formen wie Rovings, Vliese, Gelege und Gewebe. Diese werden je nach Erfordernis in mehreren Lagen eingebaut, welche mit Abstandhaltern positioniert werden.

In DE 10 2005 055 770 A werden zur textilen Armierung von Betonbauteilen Abstandsgewirke verwendet, welche gegenüberliegende Deckflächen miteinander verbinden. Je nach Bedarf kann auf den Einbau der Gewirke verzichtet werden, um somit einen Abwinkelungsbereich im Bauteil zu schaffen.

DE 10 2015 100 4538 B1 zeigt Textilbeton mit Rovings aus Carbonfasern, wobei die Carbonfasern mittels eines Rahmens zu einem Spanngelege verarbeitet und anschließend in Beton eingebracht werden. DE 10 2016 100 455 A1 zeigt eine Vorrichtung zur Erzeugung einer Garnbewehrung für Textilbeton.

DE 10 2016 124 226 A1 zeigt Textilbeton sowie ein Verfahren zur Herstellung von Textilbeton, wobei ein Gitterträger aus einzelnen Fäden (z.B. Carbonfasern) gebildet wird. Hieraus lassen sich auch dreidimensional geformte Textilbetonelemente herstellen. T. Gries ET AL: "Manufacturing of textiles for civil engineering applications" In: "Textile Fibre Composites in Civil Engineering", 1. Januar 2016 (2016-01-01), Elsevier, XP055536749, ISBN: 978-1-78242-446-8, beschreibt auf Seite 3-24 wie Rovings miteinander verknüpft werden.

### KURZBESCHREIBUNG DER ERFINDUNG

Hinsichtlich der Zugfestigkeit erfüllt Textilbeton gemäß Stand der Technik nicht die erforderlichen Eigenschaften, um in allen Bereichen einen Ersatz für Stahlbeton bieten zu können. Zusätzlich zur ebenen Abtragwirkung von Bauteilen, welche mittels 2D Bewehrungen aufgenommen werden können, gibt es eine Vielzahl an räumlichen Spannungszuständen, welche dreidimensionale Bewehrungsstrukturen erfordern, beispielsweise Spaltzugbewehrungen, Durchstanzbewehrungen, Querkraftbewehrungen oder Querzugbewehrungen. Daher ist auch die Gestaltung von gekrümmten, bewehrten Betonteilen mit Textilbeton derzeit mit Problemen bezüglich Zugfestigkeit behaftet.

Aufgabe der vorliegenden Erfindung ist es daher, eine Bewehrung insbesondere für Betonteile bereitzustellen, bei welcher diese Probleme vermindert sind. Insbesondere soll eine Betonbewehrung bereitgestellt werden, die eine Zugfestigkeit vergleichbar mit Stahl oder höher aufweist und außerdem gekrümmte Bauteile erlaubt.

Gelöst wird diese Aufgabe durch ein Verfahren zur Herstellung einer Bewehrung, umfassend eine Gitterstruktur aus Rovings, gekennzeichnet durch die Schritte
- Bereitstellen eines flächigen Trägermaterials,
- Aufbringen von Rovings auf das Trägermaterial, wobei die Rovings Kreuzungspunkte bilden,
- Fixieren von Kreuzungspunkten mit einem Faden, wobei der Faden zumindest zwei Rovings untereinander sowie mit dem Trägermaterial verknüpft,
- Auflösen des Trägermaterials mit einem Lösungsmittel für das Trägermaterial.

Bei dem erfindungsgemäßen Verfahren wird ein Bewehrungsmaterial bereitgestellt, indem mittels Sticktechnik Rovings auf ein Trägermaterial aufgebracht werden, wobei das Trägermaterial anschließend aufgelöst wird. Durch die dadurch mögliche Positionierung und die Verbindung der Rovings mittels eines Fadens lassen sich auf einfache Weise sehr stabile Gerüststrukturen erstellen, welche gegenüber den Gelegen gemäß Stand der Technik deutlich stabiler sind und daher eine höhere Verstärkung in einem Betonbauteil gewährleisten. Außerdem lassen sich durch dieses Verfahren beliebige Strukturen an Bewehrungsmaterial herstellen.

Es kann vorgesehen sein, dass die Rovings in mehreren Bahnen angeordnet werden, wobei in einem erste Schritt mehrere Querrovings auf dem Trägermaterial angeordnet werden, wobei in einem zweiten Schritt jeweils mehrere Längsrovings auf das Trägermaterial, auf welches bereits die Querrovings aufgebracht sind, aufgebracht werden, wobei sich Querrovings und Längsrovings kreuzen.

Die Materialablage der Rovings kann Richtungsunabhängig erfolgen - d.h. die Bahnen müssen nicht rechtwinkelig zueinander stehen. Das ergibt für 2D Bewehrungen den Vorteil, dass die verwendeten Fasermaterialien anisotrope Materialeigenschaften besitzen. Das heißt nur eine in Hauptzugrichtung wirkende Bewehrung erreicht die maximalen Materialkennwerte hinsichtlich Festigkeit und Steifigkeit. Das Einsparungspotential der erforderlichen textilen Bewehrung durch die Anpassung an die Hauptzugspannungsrichtung wird als sehr groß eingeschätzt. Das Material wird voll ausgenützt und nur dort eingesetzt, wo es benötigt wird.

Gibt es zwei Hauptrichtungen an Belastungen, kann vorgesehen sein, dass die mehreren Querrovings zueinander im Wesentlichen parallel angeordnet werden. Außerdem werden die mehreren Längsrovings zueinander im Wesentlichen parallel angeordnet. Querrovings und Längsrovings kreuzen sich in einem Winkel. Dieser Winkel ist auf die Hauptrichtungen der Belastungen angepasst.

Sind isotrope Materialeigenschafte gewünscht, werden nicht nur die mehreren Querrovings zueinander im Wesentlichen parallel angeordnet und es werden die mehreren Längsrovings zueinander im Wesentlichen parallel angeordnet. Die Querrovings und Längsrovings kreuzen sich außerdem in einem im Wesentlichen rechten Winkel.

Ein solches Verfahren liefert im ersten Schritt ein Bewehrungsmaterial, welches ein zweidimensionales Gitter darstellt. Aufgrund der Flexibilität kann es in beliebige Formen gebracht werden.

Weiters kann vorgesehen sein, dass auf die Querrovings und Längsrovings mehrere Bahnen Stegrovings aufgebracht werden, wobei die Stegrovings jeweils zumindest drei Abschnitte aufweisen, wobei der erste Abschnitt bereichsweise im Wesentlichen parallel zu Querrovings ist, der zweite Abschnitt bereichsweise im Wesentlichen parallel zu Längsrovings ist und der dritte Abschnitt bereichsweise im Wesentlichen parallel zu Querrovings ist, wobei sich der erste Abschnitt der Stegrovings und die Querrovings kreuzen. Dies ermöglicht zunächst ein stabileres Gitter. Es kann durch einen weiteren Verfahrensschritt, nämlich durch das zusätzliche Aufbringen von zweiten Längsrovings und zweiten Querrovings, wobei erste Längsrovings und zweite Längsrovings im Wesentlichen parallel zueinander angeordnet sind und wobei erste Querrovings und zweite Querrovings im Wesentlichen parallel zueinander angeordnet sind, eine komplexere, dreidimensionale Struktur erzielt werden.

Wird zusätzlich vorgesehen, dass mit dem Faden Kreuzungspunkte fixiert werden, wobei die ersten Querrovings mit den zweiten Längsrovings und die zweiten Querrovings mit den ersten Längsrovings verbunden werden, so kann ein dreidimensionales Gitter erstellt werden.

Schließlich kann vorgesehen sein, dass nach dem Auflösen des Trägermaterials die ersten Querrovings und die zweiten Querrovings gegeneinander verschoben werden. Mit diesem Verfahren wird eine Bewehrung mit einer ersten Lage an Querrovings und Längsrovings, wobei die Kreuzungspunkte von Querrovings und Längsrovings mit einem Faden fixiert sind und eine zweite Lage Querrovings und Längsrovings, wobei die Kreuzungspunkte von Querrovings und Längsrovings mit einem Faden fixiert sind, gebildet. Durch das Verschieben der ersten gegen die zweite Lage, richtet sich die zweite Lage gegenüber der ersten auf. Über die Stegrovings, welche die erste Lage und die zweite Lage miteinander verbinden, hält das dreidimensionale Gerüst zusammen.

Bevorzugt ist außerdem vorgesehen, dass die Stegrovings so aufgebracht sind, dass der erste Abschnitt der Stegrovings mit den zweiten Querrovings und der dritte Abschnitt der Stegrovings mit den ersten Rovings bereichsweise annähernd übereinanderliegen und über eine oder mehrere sich in Richtung der jeweiligen Querrovings verlufenden Verbindungen mit dem Faden erstrecken. Dies ermöglicht ein stabiles, ausgedehntes Gitter.

Um gekrümmte Bewehrungen herstellen zu können, kann weiters vorgesehen sein, dass die Länge der Querrovings oder Längsrovings abschnittsweise verändert wird, um so beim Aufrichten der einen Lage gegenüber der anderen Lage eine Krümmung zu erzeugen.

Es hat sich außerdem als vorteilhaft erwiesen, wenn der Faden aus einem Material besteht, welches bei Temperatureinwirkung schrumpft, wobei der Faden nach dem Fixieren einer Temperatureinwirkung unterzogen wird. Durch das Schrumpfen des Fades wird der Verknüpfungspunkt der gekreuzten Rovings stabilisiert und die Bewehrung wird noch stabiler.

Weiters kann vorgesehen sein, dass die Rovings mit Hilfsfäden auf dem Trägermaterial fixiert werden. Dies erleichtert die genaue Verlegung der Rovings auf dem Trägermaterial, was in weiterer Folge zu stabileren Strukturen führt.

Zusätzlich kann vorgesehen sein, dass die Rovings nach dem Auflösen des Trägermaterials mit einem aushärtenden Material, vorzugweise einem Harz, behandelt werden.

Das Harz kann außerdem mit einer Beschichtung versehen werden. Bevorzugt handelt es sich um eine Beschichtung, welche eine höhere Rauigkeit als die Harzoberfläche aufweist. Dies gewährleistet eine bessere Verbindung mit dem Beton. Beispielsweise kann Sand, Quarz oder dergleichen auf die Oberfläche aufgebracht werden.

Aus dem genannten Verfahren ergibt sich auch eine erfindungsgemäße Bewehrung. Daher betrifft die Erfindung außerdem eine Bewehrung, umfassend eine Gitterstruktur aus Rovings, wobei die Rovings in mehreren Bahnen angeordnet sind und Kreuzungspunkte bilden, dadurch gekennzeichnet, dass Kreuzungspunkte mit einem Faden fixiert sind, wobei der Faden zumindest zwei Rovings untereinander verknüpft.

Die Bewehrung kann derart ausgebildet sein, dass mehrere Querrovings nebeneinander angeordnet sind und mehrere Längsrovings nebeneinander angeordnet sind, wobei sich Querrovings und Längsrovings kreuzen, wobei die Kreuzungspunkte von Querrovings und Längsrovings mit einem Faden fixiert sind.

Die Rovings können Richtungsunabhängig angeordnet sein - d.h. die Bahnen müssen nicht rechtwinkelig und parallel zueinander stehen. Das ergibt für 2D Bewehrungen den Vorteil, dass die verwendeten Fasermaterialien anisotrope Materialeigenschaften besitzen. Das heißt nur eine in Hauptzugrichtung wirkende Bewehrung erreicht die maximalen Materialkennwerte hinsichtlich Festigkeit und Steifigkeit. Das Einsparungspotential der erforderlichen textilen Bewehrung durch die Anpassung an die Hauptzugspannungsrichtung wird als sehr groß eingeschätzt. Das Material wird voll ausgenützt und nur dort eingesetzt, wo es benötigt wird.

Gibt es zwei Hauptrichtungen an Belastungen, kann vorgesehen sein, dass die mehreren Querrovings zueinander im Wesentlichen jeweils zueinander parallel angeordnet sind. Außerdem sind die mehreren Längsrovings zueinander im Wesentlichen parallel angeordnet. Querrovings und Längsrovings kreuzen sich in einem Winkel. Dieser Winkel ist auf die Hauptrichtungen der Belastungen angepasst.

Sind isotrope Materialeigenschafte gewünscht, werden sind die mehreren Querrovings zueinander im Wesentlichen parallel angeordnet und es sind die mehreren Längsrovings zueinander im Wesentlichen parallel angeordnet. Außerdem kreuzen sich die Querrovings und Längsrovings in einem im Wesentlichen rechter Winkel.

In einer Ausführungsvariante ist die Bewehrung gekennzeichnet durch eine erste Lage an Querrovings und Längsrovings, wobei die Kreuzungspunkte von Querrovings und Längsrovings mit einem Faden fixiert sind und eine zweite Lage Querrovings und Längsrovings, wobei die Kreuzungspunkte von Querrovings und Längsrovings mit einem Faden fixiert sind, wobei Stegrovings vorgesehen sind, welche die erste Lage und die zweite Lage miteinander verbinden.

Die Fäden können aus einen Kunststoff, vorzugweise einem thermoplastisch verformbaren Kunststoff, insbesondere aus Polypropylen oder Polyethylen, bestehen.

Die Rovings der Bewehrung können zur Erhöhung der Stabilität mit einer Auflage aus Kunststoff, vorzugsweise auf Epoxidbasis, versehen sein. Die Auflage aus Kunststoff, kann außerdem eine Beschichtung aus einem Material aufweisen, welches eine höhere Rauigkeit aufweist, als der Kunststoff.

Bevorzugt ist außerdem vorgesehen, dass die Stegrovings so aufgebracht sind, dass der erste Abschnitt der Stegrovings mit den zweiten Querrovings und der dritte Abschnitt der Stegrovings mit den ersten Rovings bereichsweise annähernd übereinanderliegen und über eine oder mehrere sich in Richtung der jeweiligen Querrovings verlufenden Verbindungen mit dem Faden erstrecken. Dies ermöglicht ein stabiles, ausgedehntes Gitter.

Ein Aspekt der Erfindung betrifft Textilbeton, umfassend eine Bewehrung der vorgenannten Art.

Das Verfahren zur Herstellung von Textilbeton, umfasst die Schritte
- Bereitstellen einer Bewehrung der vorgenannten Art
- Einbetten der Bewehrung in Beton.

Das Bereitstellen der Bewehrung kann nach einem Verfahren zur Herstellung einer Bewehrung der vorgenannten Art erfolgen.

Die Bewehrung kann neben Textilbeton auch in anderen Bereichen verwendet werde. Eine Verwendung als Spaltzugbewehrung bei Vorspannungen oder als Durchstanzbewehrung bei Deckenelementen ist zum Beispiel denkbar. Diese Bewehrungen wären ebenfalls in Beton eingebettet

### AUSFÜHRLICHE BESCHREIBUNG DER ERFINDUNG

Nachfolgend sind weitere Details der Erfindung auch unter Zuhilfenahme von Figuren und der Beschreibung der Figuren zu finden.
Fig. 1 zeigt einen Ablageplan für eine ebene dreidimensionale Bewehrung.
Fig. 2 zeigt weitere Verfahrensschritte, welche an jene von Fig. 1 anschließen, in Seitenansicht zu Herstellung einer dreidimensionalen Bewehrung.
Fig. 3 zeigt das Prinzip des Aufspannverfahrens im Querschnitt einer ebenen dreidimensionalen Verstärkungsstruktur und die Positionierung des Funktionsmaterials.
Fig. 4 zeigt beispielhaft einen Querschnitt einer gekrümmten dreidimensionalen Verstärkungsstruktur und die Positionierung des Funktionsmaterials.

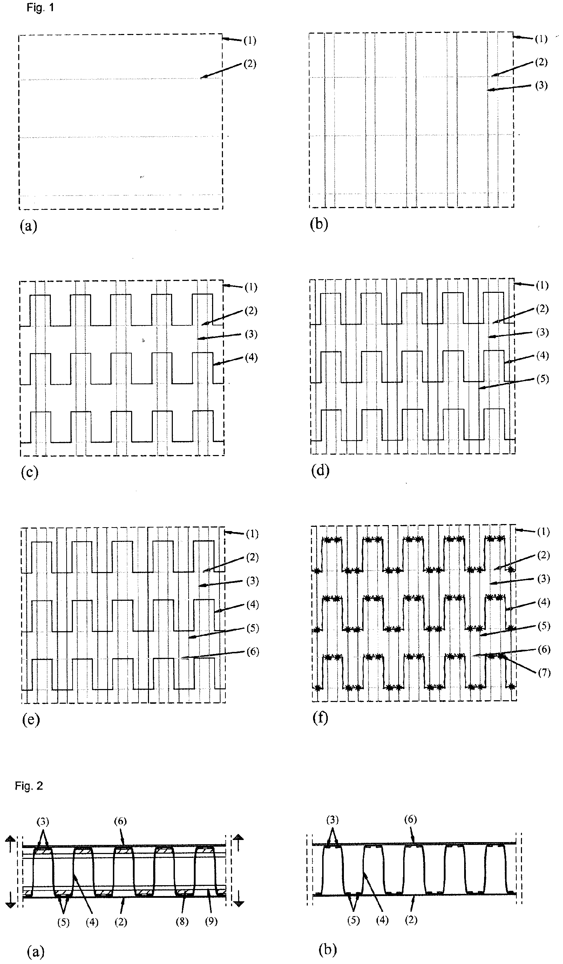

Fig. 1 zeigt ein Verfahren zur Herstellung einer Bewehrung, umfassend eine Gitterstruktur aus Rovings 2, 3, 4, 5, 6 umfassend die Schritte a bis f. In Schritt a wird zunächst ein flächiges Trägermaterial 1 bereitgestellt. Dabei handelt es sich um ein lösliches Material wie z.B. ein Cellulosegrundmaterial. Anschließend werden Rovings 2, 3, 4, 5, 6 auf das Trägermaterial 1 aufgebracht, sodass sich Rovings 2, 3, 4, 5, 6 an Kreuzungspunkten 7 kreuzen.

Die Rovings 2, 3, 4, 5, 6 werden in mehreren Bahnen angeordnet, wobei in einem ersten Schritt mehrere Querrovings 2 auf dem Trägermaterial 1 angeordnet werden (Schritt a). In einem zweiten Schritt (b) werden mehrere Längsrovings 3 auf das Trägermaterial 1 aufgebracht, auf welchem bereits die Querrovings 2 aufgebracht sind.

Die Querrovings 2 werden auf dem Trägermaterial 1 jeweils im Wesentlichen parallel und die Längsrovings 3 ebenfalls jeweils parallel angeordnet. Querrovings 2 und Längsrovings 3 schneiden sich etwa in einem rechten Winkel.

Auf die Querrovings 2 und Längsrovings 3 werden anschließend (Schritt c) mehrere Bahnen Stegrovings 4 aufgebracht werden, wobei die Stegrovings 4 jeweils zumindest drei Abschnitte 4a, 4b, 4c aufweisen, wobei der erste Abschnitt 4a bereichsweise parallel zu Querrovings 2 ist, der zweite Abschnitt 4b) bereichsweise parallel zu Längsrovings 3 ist und der dritte Abschnitt 4c bereichsweise parallel zu Querrovings 2 ist, wobei sich der erste Abschnitt der Stegrovings 4 und die Längsrovings 3 kreuzen.

Anschließend erfolgt das zusätzliche Aufbringen von zweiten Längsrovings 5 (Schritt d) und zweiten Querrovings 6 (Schritt e), wobei erste Längsrovings 5 und zweite Längsrovings 6 vorzugsweise parallel zueinander angeordnet sind und wobei erste Querrovings 2 und zweite Querrovings 6 vorzugsweise parallel zueinander angeordnet sind.

In Schritt f werden Kreuzungspunkte 7 mit einem Faden fixiert, wobei der Faden zumindest zwei Rovings untereinander sowie mit dem Trägermaterial 1 verknüpft,

Mit dem Faden werden Kreuzungspunkte 7 fixiert, wobei die ersten Querrovings 2 mit den zweiten Längsrovings 5 und die zweiten Querrovings 6 mit den ersten Längsrovings 3 verbunden werden. Außerdem werden die Stegrovings 4 in die Kreuzungspunkte 7 mitverbunden.

Anschließend können die Rovings 2, 3, 4, 5, 6 beschichtet werden.

Nach dem Auflösen des Trägermaterials 1 und Beschichten der Rovings 2, 3, 4, 5, 6 werden die ersten Querrovings 2 und die zweiten Querrovings 6 gegeneinander verschoben und die Beschichtung wird ausgehärtet.

Der Faden wird an einem Schritt durch Temperatureinwirkung geschrumpft.

Fig. 2 zeigt zusätzlich Aufspannleisten längs 8 und Aufspannleisten quer 9 zum Aufrichten des Gitters.

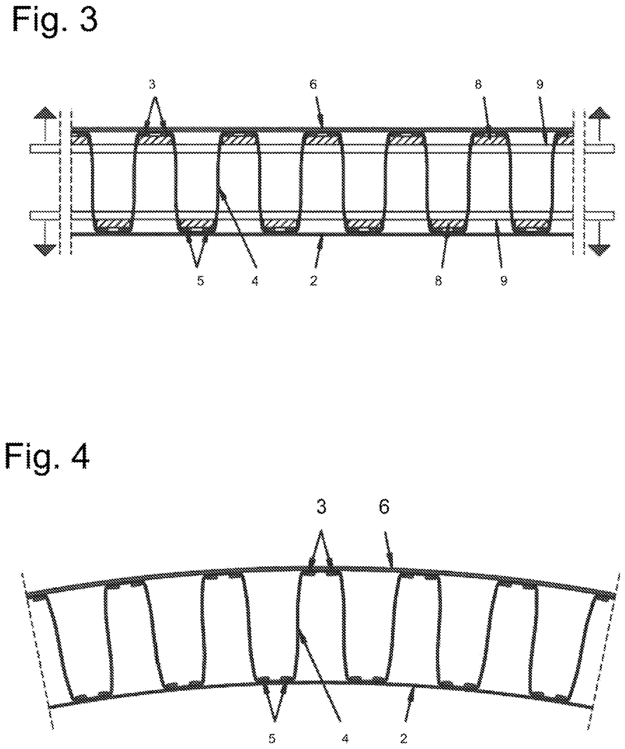

In Fig. 3 ist das aufgerichtete Gitter zu sehen.

Das mechanische Tragverhalten eines Betonbauteils im Bauwesen kann im Wesentlichen mithilfe von Druck- und Zugtrajektorien beschrieben werden. Im Unterschied zu plattenförmigen Bauteilen zeigen sich bei den meisten konturierten Bauteilen Zugspannungen in unterschiedlichen Raumrichtungen. Auch hoch belastete ebene plattenförmige Bauteile oder gekrümmte plattenförmige Bauteile weißen einen solchen Bedarf auf - Querkraft- oder Querzugbewehrung. Des Weiteren ist bei örtlich hohen Lastbeanspruchungen der Bedarf an ein verdichtetes Bewehrungsnetz gegeben z.B. Aufhängungspunkte bei Platten. Eine effiziente und lastfallgerechte Bewehrungsführung verläuft in Richtung dieser Zugtrajektorien. Verstärkungsstrukturen in diesen Richtungen tragen wesentlich zur Steigerung der Tragfähigkeit und Erhöhung der Bauteilduktilität bei. Des Weiteren besitzen die am Markt positionierten ebenen Bewehrungen eine vordefinierte Form, Materialkombination und Bewehrungsmenge. Bauteile im Bauwesen zeichnen sich aber dadurch aus, dass sie sehr unterschiedlich in Größe und Form (z.B. Wandaussparungen) sowie deren Bewehrungsanordnung sein müssen. Daher wird derzeit viel Verlustmaterial durch Zuschnitts- und Verlegearbeiten sowie unflexiblen Bewehrungsanordnungen produziert.

Erfindungsgemäß werden die Rovings mittels sticktechnischen Textilverarbeitungsverfahren in Verbindung mit
i) Tailored-Fiber-Placement (TFP)
ii) Soutache
aufgebracht. Weiterführende Arbeitsschritte dienen der Verbesserung der rohen Bewehrung.

Bei beiden Textilverarbeitungsverfahren wird ein Funktionsmaterialin Form von Rovings 2, 3, 4, 5, 6 mittels eines Hilfsfadens (nicht gezeigt) auf ein ebenes (x-y Ebene) Trägermaterial 1 gestickt (siehe Fig. 1). Das Funktionsmaterial kann dabei winkelunabhängig und positionsgetreu abgelegt werden. Die Ablage erfolgt dabei lagenförmig auf dem Prinzip eines Geleges. Es können mehrere Lagen abgelegt und verstickt werden. Beispielsweise können 2 bis 5 Lagen, vorzugsweise 2 bis 3 Lagen abgelegt werden. Für die Herstellung einer ebenen oder gekrümmten, zweidimensionalen Verstärkungsstruktur wird das Funktionsmaterial in Knotenpunkten 7 mit einem Knotenfaden verstickt. Für die Herstellung einer ebenen oder gekrümmten, dreidimensionalen Verstärkungsstruktur mit Funktionsmaterial in mind. zwei zusammenhängenden Flächen wird dieses im ersten Schritt ebenfalls nach demselben Prinzip in der Ebene gefertigt. Das sich kreuzende Verstärkungsmaterial jeder Fläche wird miteinander mit einem Knotenfaden verstickt. Parallel dazu werden diese Flächen durch integrierte Funktionsmaterialien verbunden. In weiterer Folge wird dieses mit Stegmaterial 4 bezeichnet. Das Stegmaterial 4 umfasst jeweils eine Lage des Funktionsmaterials einer Fläche und wird in die sich kreuzenden Knoten mit einem Knotenfaden eingestickt. Als Funktions- und Stegmaterial kommen alle Materialien, welche im TFP oder Soutache Prozess verarbeitet werden können in Frage wie beispielsweise Naturfasern oder Kunstfasern die auch als Sensorfäden verwendet werden können. Als Knotenfaden können ebenfalls Materialien, die im TFP oder Soutache Prozess verarbeitet werden können, verwendet werden. Bevorzugt werden Polypropylen Fäden. Als Trägermaterial 1 oder Fixierfaden werden Materialien verwendet, die in späterer Folge chemisch oder thermisch zerstört werden können, ohne das Funktionsmaterial und die Knotenfäden zu zerstören oder zu schädigen.

Unter Berücksichtigung der endgültigen Verstärkungsstruktur und Form wird die Geometrie in die Ebene abgewickelt. Da eine Geometrie mit mehrdimensionaler Krümmung wie zum Beispiel eine Freiformfläche nicht exakt abwickelbar ist muss bei diesen ein Kompromiss eingegangen werden. Aufgrund der Einbautoleranzen im fertigen Bauteil stellt dies jedoch kein großes Hindernis dar. Das gestickte Halbzeug wird in einem thermischen oder chemischen Prozess vom Trägermaterial und den Fixierfäden getrennt. Die Verwendung von Polypropylen als Knotenfäden ermöglicht beim thermischen Auslösen einen Schrumpfprozess. Dadurch versteifen sich die Knoten und bewirken eine höhere Verschiebefestigkeit im Halbzeug. In weiterer Folge kann ein Imprägnierungs- und Beschichtungssystem aufgebracht werden. Bevorzugt werden Zubereitungen auf wässriger oder Epoxidharz Basis. Der Auftrag kann auf bekannten Weisen, wie Gießen, Streichen, Tränken oder Tauchen funktionieren. Einen äußeren Abschluss bildet ein Film aus Sandkörnern. Dieser erhöht im Wesentlichen die Oberflächenrauigkeit. In experimentellen Ausziehversuchen konnten dadurch wesentlich höhere Haft- und Reibverbundwerte aufgezeichnet werden. Während der Trocknungszeit der Beschichtungen und Imprägnierungen erfolgt die schlussendliche Formgebung. Dabei muss im Besonderen auf eine gestreckte Lage aller Funktionsmaterialien geachtet werden, um spätere ungewollte Umlenkkräfte bei einer Zugbeanspruchung im Bauteil zu vermeiden.

Für die Herstellung von ebenen zwei- oder dreidimensionalen Verstärkungsstrukturen werden ebene Spannverfahren verwendet. Für die Herstellung von gekrümmten zwei- oder dreidimensionalen Verstärkungsstrukturen werden die gestickten Halbzeuge über eine endkonturnahe Form gespannt. Bei einer dreidimensionalen Verstärkungsstruktur wird die Struktur auseinander gespannt. Dabei sind mind. 2 Flächen durch normal dazu gerichtete Stegmaterialien verbunden. Diese bilden eine Schlaufe und umfassen im fertig gespannten Zustand jeweils das Funktionsmaterial einer Fläche. Im Aufspannprozess ist es besonders wichtig das Stegmaterial in gestreckter Form zu halten. Dabei wird mit einer steifen Stahlleistenkonstruktion gearbeitet, welche aus Quer- und Längsleisten besteht. Diese werden in die freien Zwischenräume des schlaffen gestickten Halbzeugs eingelegt und anschließend im äußeren Bereich voneinander abgespreizt oder auseinandergezogen. Die fertigen textilen Halbzeuge können mithilfe eines solchen Herstellungsprozesses belastungsorientiert und effizient im Bauteil integriert werden. Eine dreidimensionale Verstärkungsstruktur konnte in experimentellen Untersuchungen wesentlich zur Erhöhung der Traglast in Bezug auf Querkräfte beitragen und die Duktilität des Gesamtbauteils erhöhen.

Fig. 3 und 4 demonstrieren, dass durch geeignete Wahl der Rovings auch gekrümmte Flächen möglich sind.

### ANWENDUNGSBEISPIELE

### Beispiel 1

Auf einem Baumwollgewebe als Trägermaterial werden Carbonrovings durch Soutache-Technik entsprechend der technischen Spezifikation positioniert. Als Positionierungsfäden werden Garne aus Polypropylenfasern verwendet. Nach Fertigstellung der Stickerei wird das Gewebe mit einer Lösung von Aluminiumchlorid und Weinsäure imprägniert und bei 180 °C thermisch behandelt. Hierdurch wird das Cellulosegrundmaterial chemisch-thermisch zerstört und kann anschließend mechanisch entfernt werden. Die zweidimensionale Stickerei wird anschließend mit Zweikomponenten Epoxidharz, z.B. Sikadur 300 bestricken, wobei ein Auftrag von ca. 30 % des Eigengewichts von Carbon erreicht werden soll und in die geforderte Form gebracht. Hierzu wird die noch formbare Struktur über eine gekrümmte Form gespannt wird, welche der Einbaugeometrie im Beton entspricht. Anschließend wird die Bewehrung auf der Form ausgehärtet. Nach dem Erhärten der Bewehrung kann diese in die fertige Schalung eingebracht werden und einbetoniert werden.

### Beispiel 2

Auf einem Polyvinylalkohol Vlies als Trägermaterial werden Carbonrovings durch Soutache-Technik entsprechend der technischen Spezifikation positioniert. Als Positionierungsfäden werden Garne aus Polypropylenfasern verwendet. Nach Fertigstellung der Stickerei wird das Vlies mit heißem Wasser ausgelöst und getrocknet. Wird bei höherer Temperatur z.B. 180 °C getrocknet so kann auch ein Verfestigen der Polypropylenfäden erreicht werden. Die zweidimensionale Stickerei wird anschließend mit Zweikomponenten Epoxidharz, z.B. Sikadur 300 bestricken, wobei ein Auftrag von ca. 30 % des Eigengewichts an Carbon erreicht werden soll und in die geforderte Form gebracht. Hierzu wird die noch formbare Struktur über eine gekrümmte Form gespannt wird, welche der Einbaugeometrie im Beton entspricht. Anschließend wird die Bewehrung auf der Form ausgehärtet. Nach dem Erhärten der Bewehrung kann diese in die fertige Schalung eingebracht werden und einbetoniert werden.

### Beispiel 3

Durchführung entsprechend Anwendungsbeispiel 1, wobei als Bewehrungsmaterial Rovings aus AR-Glas anstelle der Carbon-Rovings verwendet werden.

### Beispiel 4

Durchführung entsprechend Anwendungsbeispiel 2, wobei die fertige Carbonstruktur vor dem Einbau in die Schalung mit Epoxid-Harz besprüht wird und anschließend vor dem Aushärten der aufgesprühten Epoxidmasse mit Sand beaufschlagt wird, wodurch eine sehr gute Haftung zur Beton-Masse entsteht.

### Beispiel 5

Auf einem Polyvinylalkohol Vlies als Trägermaterial werden Carbonrovings durch Soutache-Technik entsprechend der technischen Spezifikation positioniert. Als Positionierungsfäden werden Garne aus Polypropylenfasern verwendet. Nach Fertigstellung der Stickerei wird das Vlies mit heißem Wasser ausgelöst und bei höherer Temperatur z.B. 180 °C getrocknet um ein Verfestigen der Polypropylenfäden zu erreichen. Die zweidimensionale Stickerei wird anschließend mit einer geringen Menge an Zweikomponenten Epoxidharz, z.B. Sikadur 300 bestricken, wobei ein Auftrag von ca. 10 % des Eigengewichts an Carbon erreicht werden soll und in die geforderte Form gebracht. Hierzu wird die noch formbare Struktur über eine gekrümmte Form gespannt wird, welche der Einbaugeometrie im Beton entspricht. Anschließend wird die Bewehrung auf der Form ausgehärtet. Nach dem Erhärten der Bewehrung kann diese entnommen werden. Unmittelbar vor dem Einbetonieren in der fertigen Schalung wird die Bewehrung mit einem nasshärtenden Epoxid-Harz imprägniert, eingebracht und einbetoniert.

Die Erfindung betrifft gestickte ebene oder gekrümmte, zweidimensionale oder dreidimensionale Verstärkungsstrukturen. Diese bestehen aus veredelten alkali- und korrosionsresistenten endloslangen Hochleistungsfasern als Bewehrung und dienen zur Aufnahme von Zugkräften in einer alkalischen, aushärtenden Matrix, wie Beton. Eine gekrümmte Verstärkungsstruktur wird als Struktur mit eindimensionaler oder mehrdimensionaler Krümmung definiert. Eine dreidimensionale Verstärkungsstruktur wird als Struktur aus mind. zwei zusammenhängenden ebenen oder gekrümmten Verstärkungsstrukturen definiert. Letztere werden durch integrierte, lastaufnehmende Verbindungsstrukturen auf Abstand abgehalten.

Des Weiteren betrifft die Erfindung die Herstellung von belastungsorientierten gestickten Strukturen, welche durch das Aufsticken von Funktionsmaterial in mehreren Ebenen, mittels TFP Aufbau (Tailored-Fiber-Placement) oder Soutache Aufbau, auf einen Träger fixiert werden, der in weiterer Folge thermisch oder chemisch zerstört wird.

Außerdem betrifft die Erfindung die Knotenausführung (Stickknoten, Material und Auslöse Prozess) einer Verstärkungsstruktur, die Anordnung des Funktionsmaterials, den Herstellungsprozess einer dreidimensionalen Verstärkungsstruktur sowie die Erweiterungsmöglichkeiten von zusätzlichen Funktionen im Stickprozess (Integration Abstandshalter zur Schalung, Integration Licht- und Stromleitende Materialien, Integration Befestigungselemente)

Schlussendlich betrifft die Erfindung veredelte Hochleistungsfasern, deren Oberflächenbeschaffenheit einen kraftschlüssigen Verbund zur aushärtenden Matrix ergeben.

Im Stand der Technik wird auf verschiedene technische Aspekte im Erfindungsgebiet eingegangen. Unter anderem fällt auf, dass hoch effiziente und belastungsorientierte textile Verstärkungsstrukturen für eine breite und vielfältige Anwendung im Bauwesen, wie dem konstruktiven Betonbau, nicht vorhanden sind beziehungsweise den Anforderungen zu wenig entsprechen. Der Erfindung liegt daher die Aufgabe zu Grunde, belastungsgerechte - in Hauptzugspannungsrichtung angeordnete alkali- und korrosionsresistente Materialien in einer zweidimensionalen oder dreidimensionalen Verstärkungsstruktur für eine alkalische aushärtende Matrix, wie Beton, bereitzustellen.

Diese Erfindung dient als Ersatz der Stahlbewehrungen von komplizierten, stark beanspruchten Bauteilen und ist in vielen Bereichen des Bauwesens einsetzbar, wie beispielsweise im Fertigteilbau, Hoch- und Tiefbau. Sie kann auch in Kombination mit herkömmlichen Bewehrungsmaterialien (schlaffer Stahl, Spannstahl, Stäbe aus Basalt oder Carbon usw.) die Armierung eines Betonbauteils ergänzen und/oder zusätzliche Funktionen (Sensorik) in das Bauteil mitintegrieren.

## Patentansprüche

1. Verfahren zur Herstellung einer Bewehrung, umfassend eine Gitterstruktur aus Rovings (2, 3, 4, 5, 6), **gekennzeichnet durch** die Schritte
• Bereitstellen eines flächigen Trägermaterials (1),
• Aufbringen von Rovings (2, 3, 4, 5, 6) auf das Trägermaterial (1), wobei die Rovings (2, 3, 4, 5, 6) Kreuzungspunkte (7) bilden,
• Fixieren von Kreuzungspunkten (7) mit einem Faden, wobei der Faden zumindest zwei Rovings (2, 3, 4, 5, 6) untereinander sowie mit dem Trägermaterial (1) verknüpft,
• Auflösen des Trägermaterials (1) mit einem Lösungsmittel für das Trägermaterial (1).

2. Verfahren nach Anspruch 1, **dadurch gekennzeichnet, dass** die Rovings (2, 3, 4, 5, 6) in mehreren Bahnen angeordnet werden, wobei in einem ersten Schritt mehrere Querrovings (2) auf dem Trägermaterial (1) angeordnet werden, wobei in einem zweiten Schritt jeweils mehrere Längsrovings (3) das Trägermaterial, auf welches bereits die Querrovings (2) aufgebracht sind, aufgebracht werden, wobei sich Querrovings (2) und Längsrovings (3) kreuzen.

3. Verfahren nach Anspruch 2, **dadurch gekennzeichnet, dass** die Querrovings (2) auf dem Trägermaterial (1) jeweils im Wesentlichen parallel und die Längsrovings (3) jeweils parallel angeordent werden, wobei sich Querrovings (2) und Längsrovings (3) etwa in einem rechten Winkel schneiden.

4. Verfahren nach Anspruch 2 oder Anspruch 3, **dadurch gekennzeichnet, dass** auf die Querrovings (2) und Längsrovings (3) mehrere Bahnen Stegrovings (4) aufgebracht werden, wobei die Stegrovings (4) jeweils zumindest drei Abschnitte (4a, 4b, 4c) aufweisen, wobei der erste Abschnitt (4a) bereichsweise im Wesentlichen parallel zu Querrovings (2) ist, der zweite Abschnitt (4b) bereichsweise im Wesentlichen parallel zu Längsrovings (3) ist und der dritte Abschnitt (4c) bereichsweise im Wesentlichen parallel zu Querrovings (2) ist, wobei sich der erste Abschnitt der Stegrovings (4) und die Längsrovings (3) kreuzen.

5. Verfahren nach Anspruch 4, **gekennzeichnet durch** das zusätzliche Aufbringen von zweiten Längsrovings (5) und zweiten Querrovings (6), wobei erste Längsrovings (3) und zweite Längsrovings (6) vorzugsweise im Wesentlichen parallel zueinander angeordnet sind und wobei erste Querrovings (2) und zweite Querrovings (6) vorzugsweise im Wesentlichen parallel zueinander angeordnet sind.

6. Verfahren nach Anspruch 5, **dadurch gekennzeichnet, dass** mit dem Faden Kreuzungspunkte (7) fixiert werden, wobei die ersten Querrovings (2) mit den zweiten Längsrovings (5) und die zweiten Querrovings (6) mit den ersten Längsrovings (3) verbunden werden, wobei vorzugsweise nach dem Auflösen des Trägermaterials (1) die ersten Querrovings (2) und die zweiten Querrovings (6) gegeneinander verschoben werden.

7. Verfahren nach einem der Ansprüche 1 bis 6, **dadurch gekennzeichnet, dass** der Faden aus einem Material besteht, welches bei Temperatureinwirkung schrumpft, wobei der Faden nach dem Fixieren einer Temperatureinwirkung unterzogen wird.

8. Bewehrung, umfassend eine Gitterstruktur aus Rovings (2, 3, 4, 5, 6), wobei die Rovings (2, 3, 4, 5, 6) in mehreren Bahnen angeordnet sind und Kreuzungspunkte (7) bilden, **dadurch gekennzeichnet, dass** Kreuzungspunkte (7) mit einem Faden fixiert sind, wobei der Faden zumindest zwei Rovings (2, 3, 4, 5, 6) untereinander verknüpft.

9. Bewehrung nach Anspruch 8, **dadurch gekennzeichnet**, mehrere Querrovings (2) angeordnet sind und mehrere Längsrovings (3) angeordnet sind, wobei sich Querrovings (2) und Längsrovings (3) kreuzen und wobei Kreuzungspunkte (7) von Querrovings (2) und Längsrovings (3) mit einem Faden fixiert sind.

10. Bewehrung nach Anspruch 9, **dadurch gekennzeichnet, dass** mehrere Querrovings (2) jeweils zueinander im Wesentlichen parallel angeordnet sind und mehrere Längsrovings (3) jeweils zueinander im Wesentlichen parallel angeordnet sind, wobei Querrovings (2) und Längsrovings (3) in einem Winkel, vorzugsweise im Wesentlichen rechtwinkelig, zueinander angeordnet sind.

11. Bewehrung nach Anspruch 9 oder Anspruch 10, **gekennzeichnet durch** eine erste Lage an Querrovings (2) und Längsrovings (5), wobei die Kreuzungspunkte von Querrovings (2) und Längsrovings (5) mit einem Faden fixiert sind und eine zweite Lage Querrovings (6) und Längsrovings (3), wobei die Kreuzungspunkte von Querrovings (6) und Längsrovings (3) mit einem Faden fixiert sind, wobei Stegrovings (4) vorgesehen sind, welche die erste Lage und die zweite Lage miteinander verbinden.

12. Bewehrung nach einem der Ansprüche 8 bis 11, **dadurch gekennzeichnet, dass** die Fäden aus einen Kunststoff, vorzugweise einem thermoplastisch verformbaren Kunststoff, insbesondere aus Polypropylen oder Polyethylen, bestehen.

13. Bewehrung nach einem der Ansprüche 8 bis 12, **dadurch gekennzeichnet, dass** die Rovings mit einer Beschichtung aus Kunststoff, vorzugsweise auf Epoxidbasis, versehen sind.

14. Härtende Matrix, vorzugweise Textilbeton, umfassend eine Bewehrung nach einem der Ansprüche 8 bis 13.

15. Verfahren zur Herstellung von Textilbeton, umfassend die Schritte
• Bereitstellen einer Bewehrung nach einem der Ansprüche 8 bis 13 oder einer Bewehrung nach einem Verfahren zur Herstellung einer Bewehrung nach einem der Ansprüche 1 bis 7,
• Einbetten der Bewehrung in Beton.

## Claims

1. A method of producing a reinforcement, comprising a lattice structure made of rovings (2, 3, 4, 5, 6), **characterized by** the steps of
• providing a flat carrier material (1),
• applying rovings (2, 3, 4, 5, 6) to the carrier material (1), the rovings (2, 3, 4, 5, 6) forming crossing points (7),
• fixing crossing points (7) with a thread, the thread linking at least two rovings (2, 3, 4, 5, 6) with one another as well as with the carrier material (1),
• dissolving the carrier material (1) with a solvent for the carrier material (1).

2. A method according to claim 1, **characterized in that** the rovings (2, 3, 4, 5, 6) are arranged in several webs, wherein, in a first step, several transverse rovings (2) are arranged on the carrier material (1), wherein, in a second step, several longitudinal rovings (3) are, in each case, applied to the carrier material to which the transverse rovings (2) have already been applied, with transverse rovings (2) and longitudinal rovings (3) crossing each other.

3. A method according to claim 2, **characterized in that** the transverse rovings (2) on the carrier material (1) are, in each case, arranged substantially in parallel and the longitudinal rovings (3) are, in each case, arranged in parallel, transverse rovings (2) and longitudinal rovings (3) intersecting each other roughly at right angles.

4. A method according to claim 2 or claim 3, **characterized in that** several webs of web rovings (4) are applied to the transverse rovings (2) and the longitudinal rovings (3), the web rovings (4) each having at least three sections (4a, 4b, 4c), with the first section (4a) being located substantially in parallel to transverse rovings (2) in some areas, the second section (4b) being located substantially in parallel to longitudinal rovings (3) in some areas and the third section (4c) being located substantially in parallel to transverse rovings (2) in some areas, the first section of the web rovings (4) and the longitudinal rovings (3) crossing each other.

5. A method according to claim 4, **characterized by** the additional application of second longitudinal rovings (5) and second transverse rovings (6), with first longitudinal rovings (3) and second longitudinal rovings (6) preferably being arranged substantially in parallel to each other and with first transverse rovings (2) and second transverse rovings (6) preferably being arranged substantially in parallel to each other.

6. A method according to claim 5, **characterized in that** crossing points (7) are fixed with the thread, the first transverse rovings (2) being connected to the second longitudinal rovings (5) and the second transverse rovings (6) being connected to the first longitudinal rovings (3), wherein the first transverse rovings (2) and the second transverse rovings (6) are shifted against each other preferably after the carrier material (1) has been dissolved.

7. A method according to any of claims 1 to 6, **characterized in that** the thread is comprised of a material which shrinks when it is exposed to the effects of temperature, with the thread being subjected to the effects of temperature after fixing.

8. A reinforcement comprising a lattice structure made of rovings (2, 3, 4, 5, 6), wherein the rovings (2, 3, 4, 5, 6) are arranged in several webs and form crossing points (7), **characterized in that** crossing points (7) are fixed with a thread, the thread linking at least two rovings (2, 3, 4, 5, 6) with one another.

9. A reinforcement according to claim 8, **characterized in that** several transverse rovings (2) are arranged and several longitudinal rovings (3) are arranged, with transverse rovings (2) and longitudinal rovings (3) crossing each other and with crossing points (7) of transverse rovings (2) and longitudinal rovings (3) being fixed with a thread.

10. A reinforcement according to claim 9, **characterized in that** several transverse rovings (2) are each arranged substantially in parallel to each other and several longitudinal rovings (3) are each arranged substantially in parallel to each other, with transverse rovings (2) and longitudinal rovings (3) being arranged at an angle relative to each other, preferably substantially at right angles.

11. A reinforcement according to claim 9 or claim 10, **characterized by** a first layer of transverse rovings (2) and longitudinal rovings (5), the crossing points of transverse rovings (2) and longitudinal rovings (5) being fixed with a thread, and a second layer of transverse rovings (6) and longitudinal rovings (3), the crossing points of transverse rovings (6) and longitudinal rovings (3) being fixed with a thread, wherein web rovings (4) are provided which interconnect the first layer and the second layer.

12. A reinforcement according to any of claims 8 to 11, **characterized in that** the threads are made of plastic, preferably of a thermoplastically deformable plastic, in particular of polypropylene or polyethylene.

13. A reinforcement according to any of claims 8 to 12, **characterized in that** the rovings are provided with a coating made of plastic, preferably based on epoxy.

14. A hardening matrix, preferably textile-reinforced concrete, comprising a reinforcement according to any of claims 8 to 13.

15. A method of producing textile-reinforced concrete, comprising the steps of
• providing a reinforcement according to any of claims 8 to 13 or a reinforcement according to a method of producing a reinforcement according to any of claims 1 to 7,
• embedding the reinforcement in concrete.

## Revendications

1. Procédé pour la fabrication d'une armature comprenant une structure de grille faite de mèches (2, 3, 4, 5, 6), **caractérisé par** les étapes suivantes :
• fourniture d'un matériau de support plat (1),
• application de mèches (2, 3, 4, 5, 6) sur le matériau de support (1), les mèches (2, 3, 4, 5, 6) formant des points d'intersection (7),
• fixation des points d'intersection (7) avec un fil, lequel fil relie au moins deux mèches (2, 3, 4, 5, 6) entre elles ainsi qu'avec le matériau de support (1) et
• dissolution du matériau de support (1) avec un solvant adapté pour le matériau de support (1).

2. Procédé selon la revendication 1, **caractérisé en ce que** les mèches (2, 3, 4, 5, 6) sont disposées en plusieurs bandes, plusieurs mèches transversales (2) étant disposées sur le matériau de support (1) dans une première étape et plusieurs mèches longitudinales (3) étant appliquées, dans une deuxième étape, sur le matériau de support sur lequel les mèches transversales (2) ont déjà été appliquées, de sorte que les mèches transversales (2) et les mèches longitudinales (3) se croisent.

3. Procédé selon la revendication 2, **caractérisé en ce que** les mèches transversales (2) sont disposées sensiblement parallèlement entre elles sur le matériau de support (1) et les mèches longitudinales (3) sont disposées sensiblement parallèlement entre elles, les mèches transversales (2) et les mèches longitudinales (3) se croisant sensiblement à angle droit.

4. Procédé selon la revendication 2 ou la revendication 3, **caractérisé en ce que** plusieurs bandes de mèches de traverse (4) sont appliquées sur les mèches transversales (2) et les mèches longitudinales (3), ces mèches de traverse (4) présentant chacune au moins trois segment (4a, 4b, 4c), le premier segment (4a) étant localement sensiblement parallèle aux mèches transversales (2), le deuxième segment (4b) étant localement sensiblement parallèle aux mèches longitudinales (3) et le troisième segment (4a) étant localement sensiblement parallèle aux mèches transversales (2), le premier segment des mèches de traverse (4) et les mèches longitudinales (3) se croisant.

5. Procédé selon la revendication 4, **caractérisé par** l'application supplémentaire de deuxièmes mèches longitudinales (5) et de deuxièmes mèches transversales (6), les premières mèches longitudinales (3) et les deuxièmes mèches longitudinales (6) étant de préférence disposées sensiblement parallèlement entre elles et les premières mèches transversales (2) et les deuxièmes mèches transversales (6) étant de préférence disposées sensiblement parallèlement entre elles.

6. Procédé selon la revendication 5, caractérisé den ce que des points de croisement (7) sont fixés avec le fil, les premières mèches transversales (2) étant reliées avec les deuxièmes mèches longitudinales (5) et les deuxièmes mèches transversales (6) avec les premières mèches longitudinales (3), les premières mèches transversales (2) et les deuxièmes mèches transversales (6) étant de préférence décalées entre elles après la dissolution du matériau de support (1).

7. Procédé selon une des revendications 1 à 6, caractérisé den ce que le fil est constitué d'un matériau qui se rétracte sous l'influence de la température, ce fil étant soumis à une influence de la température après la fixation.

8. Armature comprenant une structure de grille faite de mèches (2, 3, 4, 5, 6), lesquelles mèches (2, 3, 4, 5, 6) sont disposées en plusieurs bandes et forment des points de croisement (7), **caractérisée en ce que** les points de croisement (7) sont fixés avec un fil, ce fil reliant au moins deux mèches (2, 3, 4, 5, 6) entre elles.

9. Armature selon la revendication 8, **caractérisée en ce que** plusieurs mèches transversales (2) et plusieurs mèches longitudinales (3) sont agencées, les mèches transversales (2) et les mèches longitudinales (3) se croisant et les points de croisement (7) des mèches transversales (2) et des mèches longitudinales (3) étant fixés avec un fil.

10. Armature selon la revendication 9, **caractérisée en ce que** plusieurs mèches transversales (2) sont disposées sensiblement parallèlement entre elles et plusieurs mèches longitudinales (3) sont disposées sensiblement parallèlement entre elles, les mèches transversales (2) et les mèches longitudinales (3) se croisant entre elles de préférence sensiblement à angle droit.

11. Armature selon la revendication 9 ou la revendication 10, **caractérisée par** une première couche de mèches transversales (2) et de mèches longitudinales (5), les points de croisement des mèches transversales (2) et des mèches longitudinales (5) étant fixés avec un fil, et une deuxième couche de mèches transversales (6) et de mèches longitudinales (3), les points de croisement des mèches transversales (6) et des mèches longitudinales (3) étant fixés avec un fil, des mèches de traverse (4) qui relient entre elles la première couche et la deuxième couche étant prévues.

12. Armature selon une des revendications 8 à 11, **caractérisée en ce que** les fils sont constitués d'une matière plastique, de préférence d'une matière plastique thermoformable, en particulier de polypropylène ou de polyéthylène.

13. Armature selon une des revendications 8 à 12, **caractérisée en ce que** les mèches sont dotées d'un revêtement en matière plastique, de préférence à base d'époxy.

14. Matrice durcissable, de préférence en béton renforcé en textile, comprenant une armature selon une des revendications 8 à 13.

15. Procédé pour la fabrication de béton renforcé en textile, comprenant les étapes suivantes :
• fourniture d'une armature selon une des revendications 8 à 13 ou d'une armature selon un procédé pour la fabrication d'une armature selon une des revendications 1 à 7 et
• intégration de l'armature dans le béton.
les premier et deuxième points d'intersection (19) se trouvant à une distance (b) l'un de l'autre qui est inférieure à 50 mm, de préférence inférieure à 10 mm.
